(19) Europäisches Patentamt
European Patent Office
Office européen des brevets

(11) **EP 4 751 941 A1**

(12) **EUROPEAN PATENT APPLICATION**
published in accordance with Art. 153(4) EPC

(43) Date of publication:
**03.06.2026 Bulletin 2026/23**

(21) Application number: **24862463.7**

(22) Date of filing: **29.07.2024**

(51) International Patent Classification (IPC):
**B60C 23/04** (2006.01)     **H01M 10/42** (2006.01)
**H01M 10/48** (2006.01)

(52) Cooperative Patent Classification (CPC):
**B60C 23/04; H01M 10/42; H01M 10/48**

(86) International application number:
**PCT/JP2024/026998**

(87) International publication number:
**WO 2025/052807 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.09.2023 JP 2023143869**

(71) Applicant: **BRIDGESTONE CORPORATION**
**Chuo-ku**
**Tokyo 104-8340 (JP)**

(72) Inventors:
• **GOTO Takato**
**Tokyo 104-8340 (JP)**
• **ITO Koichi**
**Sendai-shi, Miyagi 980-8577 (JP)**

(74) Representative: **Marks & Clerk LLP**
**15 Fetter Lane**
**London EC4A 1BW (GB)**

(54) **BATTERY LIFE PREDICTION DEVICE AND BATTERY LIFE PREDICTION METHOD**

(57)     A battery life prediction apparatus includes an acquisition interface (131) that acquires input data including a tire temperature, a tire pressure, a value related to a battery voltage, and a usage time of the battery, and a predictor (133) that predicts, as the life of the battery, a value related to the battery voltage after a predetermined period in the future, using the input data and a prediction model. With a basic statistical quantity, cumulative value, change per unit time, time-series feature, and travel time with regard to the tire temperature and the tire pressure in performance data as preprocessing amounts, the prediction model is generated by machine learning using training data that takes a value related to battery voltage and at least a portion of the preprocessing amounts as explanatory variables and the value related to the battery voltage after the predetermined period as an objective variable.

*FIG. 1*

EP 4 751 941 A1

**Description**

TECHNICAL FIELD

The present disclosure relates to a battery life prediction apparatus and a battery life prediction method.

BACKGROUND

Conventionally, various techniques for predicting battery life have been proposed. For example, PTL 1 discloses a technique for obtaining the remaining life of a storage battery for an electric vehicle. In the technique of PTL 1, regression analysis is performed using a plurality of sets of accumulated travel counts and corresponding voltage values to obtain a regression equation. From the regression equation, the travel count corresponding to the life voltage value at a predetermined discharge amount is obtained, and the current travel count is subtracted to estimate the remaining life travel count.

CITATION LIST

Patent Literature

PTL 1: JP H06-163084 A

SUMMARY

(Technical Problem)

Here, there is a demand for a technique to predict the life of batteries used in devices mounted on vehicles other than electric vehicles. For example, sensors and transmitters used in tire pressure monitoring systems (TPMS: Tire Pressure Monitoring System) are often powered by batteries. In order to prevent the data transmission of the TPMS, which is necessary for tire condition management, from stopping, predicting battery life and replacing the battery at an appropriate timing is important from the perspective of safe vehicle operation. The technique of PTL 1 estimates how many times remain until the storage battery can no longer be used as a storage battery for an electric vehicle, due to the decrease in the capacity that can be fully charged as the storage battery deteriorates through repeated charging and discharging. That is, the technique of PTL 1 predicts changes in the full charge capacity due to repeated charging and discharging, and since the prediction target is different, it cannot be applied to battery life prediction (estimation of remaining amount) for TPMS.

In view of these circumstances, an object of the present disclosure is to provide a battery life prediction apparatus and a battery life prediction method capable of highly accurately predicting the battery life of a detection apparatus that detects information on the state of a tire.

(Solution to Problem)

(1) A battery life prediction apparatus according to one embodiment of the present disclosure is a battery life prediction apparatus that predicts the life of a battery of a detection apparatus that detects information on a state of a tire, comprising:

an acquisition interface configured to acquire input data including a temperature of the tire, a pressure of the tire, a value related to a voltage of the battery, and a usage time of the battery; and
a predictor configured to predict, as the life of the battery, a value related to the voltage after a predetermined period in the future, using the input data and a prediction model,
wherein the prediction model is generated by machine learning using training data that takes, as preprocessing amounts, a basic statistical quantity, a cumulative value, a change per unit time, a time-series feature, and travel time with regard to the temperature of the tire and the pressure of the tire in performance data, and takes a value related to voltage of the battery and at least a portion of the preprocessing amounts as explanatory variables and the value related to voltage of the battery after the predetermined period as an objective variable.

(2) In one embodiment of the present disclosure, in (1),

the input data is acquired from the detection apparatus by fixed-point observation by a reading apparatus installed at a predetermined location, and

the acquisition interface is configured to acquire the input data via the reading apparatus.

(3) In one embodiment of the present disclosure, in (1) or (2),
the value related to the voltage is a voltage value that is segmented and grouped, and at least one group corresponds to a state of the battery when the battery is to be replaced.
(4) In one embodiment of the present disclosure, in (3),
the usage time of the battery is an elapsed time from when the value related to the voltage first fluctuates.
(5) In one embodiment of the present disclosure, in any one of (1) to (4),

the performance data includes pre-travel data and post-travel data determined based on a change in the temperature of the tire, and

the travel time is calculated as a difference between the usage time of the battery included in the pre-travel data and the usage time of the battery included in the post-travel data.

(6) In one embodiment of the present disclosure, in (5),

the cumulative value is calculated as a sum of values obtained by multiplying a time difference by a difference between the pre-travel data and the post-travel data for the temperature of the tire and the pressure of the tire, and

the time-series feature is a trend component or an autoregressive component in time-series analysis for the temperature of the tire and the pressure of the tire.

(7) In one embodiment of the present disclosure, in (5) or (6),
the temperature of the tire in the pre-travel data is updated based on weather information.
(8) In one embodiment of the present disclosure, in any one of (1) to (7),
the training data also uses axle position, vehicle ID, fleet ID, and country information as explanatory variables.
(9) A battery life prediction method according to one embodiment of the present disclosure is a battery life prediction method for predicting a life of a battery of a detection apparatus that detects information on a state of a tire, comprising:

acquiring input data including a temperature of the tire, a pressure of the tire, a value related to a voltage of the battery, and a usage time of the battery; and

predicting, as the life of the battery, a value related to the voltage after a predetermined period in the future, using the input data and a prediction model,

wherein the prediction model is generated by machine learning using training data that takes, as preprocessing amounts, a basic statistical quantity, a cumulative value, a change per unit time, a time-series feature, and travel time with regard to the temperature of the tire and the pressure of the tire in performance data, and takes a value related to voltage of the battery and at least a portion of the preprocessing amounts as explanatory variables and the value related to voltage of the battery after the predetermined period as an objective variable.

(Advantageous Effect)

According to the present disclosure, it is possible to provide a battery life prediction apparatus and a battery life prediction method capable of highly accurately predicting the battery life of a detection apparatus that detects information on the state of a tire.

BRIEF DESCRIPTION OF THE DRAWINGS

In the accompanying drawings:

FIG. 1 is a diagram illustrating an example configuration of a battery life prediction system including a battery life prediction apparatus according to one embodiment of the present disclosure;
FIG. 2 is another diagram illustrating an example configuration of a battery life prediction system including a battery life prediction apparatus according to one embodiment of the present disclosure;
FIG. 3 is a flowchart exemplifying the processing of battery life prediction;
FIG. 4 is a flowchart illustrating details of the model generation step in FIG. 3;
FIG. 5 is a flowchart illustrating details of the battery life prediction step in FIG. 3; and
FIG. 6 is a diagram for explaining preprocessing.

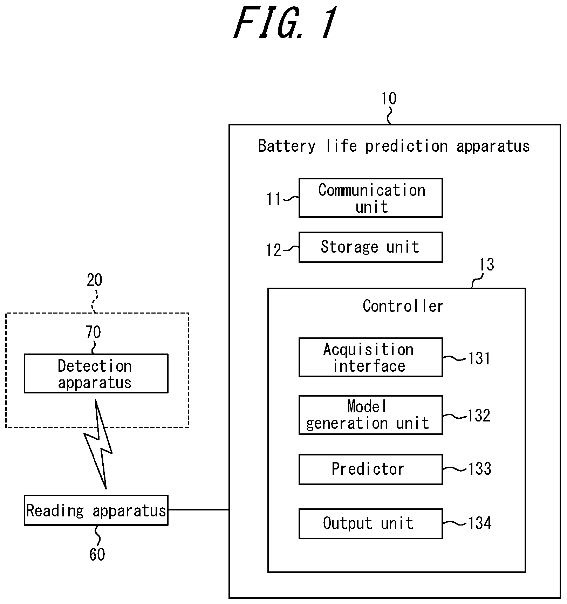

Hereinafter, with reference to the drawings, a battery life prediction apparatus 10 (see FIG. 1) and a battery life prediction method according to an embodiment of the present disclosure will be described. In each drawing, the same or corresponding parts are denoted by the same reference numerals. In the description of the present embodiment, explanations of the same or corresponding parts may be omitted or simplified as appropriate. Here, the "life" of a battery refers, for example, in the case of a primary battery such as a button battery, an alkaline battery, or a manganese battery, to a state in which the voltage has dropped to such an extent that the detection apparatus 70 (see FIG. 1) can no longer perform its normal functions, necessitating replacement. The functions of the detection apparatus 70 include, for example, detection functions and communication functions. Further, the "life" of a battery refers, for example, in the case of a secondary battery, to a state in which the voltage has dropped to such an extent that the detection apparatus 70 can no longer perform its normal functions, necessitating charging or replacement.

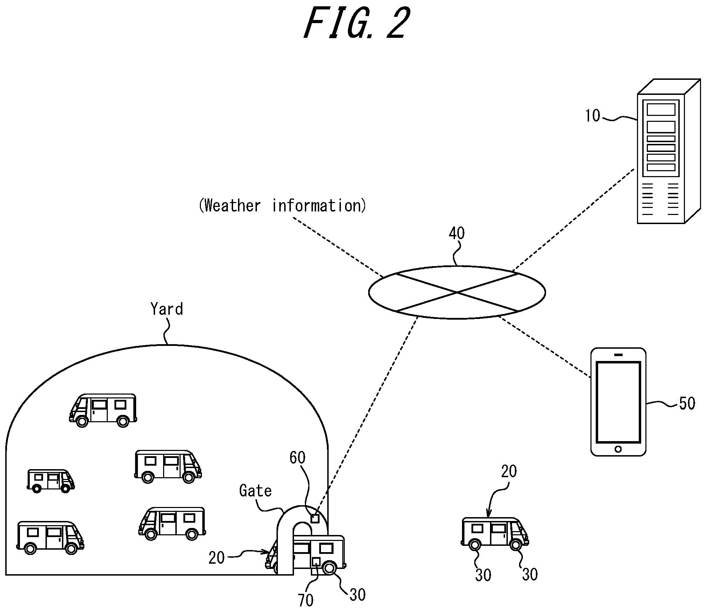

FIG. 1 and FIG. 2 are diagrams illustrating an example configuration of a battery life prediction system including the battery life prediction apparatus 10 according to the present embodiment. FIG. 1 is a block diagram including an example of the internal configuration of the battery life prediction apparatus 10. FIG. 2 illustrates the overall configuration of the battery life prediction system.

The battery life prediction apparatus 10 predicts the life of a battery of a detection apparatus 70 that detects information regarding the state of a tire 30 mounted on a vehicle 20. In the present embodiment, the detection apparatus 70 is an in-vehicle device mounted on the vehicle 20 or the tire 30, with specific examples to be described later. The vehicle 20 may be, for example, a passenger car, truck, bus, or construction vehicle, and is not limited to a specific type of mobile body. In the present embodiment, the vehicle 20 is described as a truck that performs work in a yard (Yard in FIG. 2) or carries in or out goods to or from the yard. In the yard, a plurality of vehicles 20 perform work, carry-in, or carry-out operations.

In the present embodiment, the battery life prediction apparatus 10 generates a prediction model and predicts the life of the battery of the detection apparatus 70 using the generated prediction model. That is, the battery life prediction apparatus 10 according to the present embodiment is described as an apparatus having both the function of generating a prediction model (model generation apparatus) and the function of estimating battery life. As another example, the battery life prediction apparatus 10 may be an apparatus that has only the function of estimating battery life using a prediction model generated in advance.

As illustrated in FIG. 1, the battery life prediction apparatus 10 includes a communication unit 11, a storage unit 12, and a controller 13. The controller 13 includes an acquisition interface 131, a model generator 132, a predictor 133, and an output unit 134. The battery life prediction apparatus 10 may be, for example, a computer as its hardware configuration. Details of the components of the battery life prediction apparatus 10 will be described later. Here, the battery life prediction apparatus 10 may be constituted not by a single device, but by a plurality of devices disposed at different locations and capable of transmitting and receiving data with each other via a network 40. That is, a plurality of devices connected via the network 40 may function as the battery life prediction apparatus 10 as illustrated in FIG. 1 as a whole. Therefore, for example, the battery life prediction apparatus 10 may be constituted by a single computer as its hardware configuration, or by a plurality of computers connected via the network 40. When constituted by a plurality of computers, the storage unit 12 may be a shared memory or a storage device on the network 40 accessible by each computer.

The battery life prediction apparatus 10 may constitute a battery life prediction system together with devices other than the battery life prediction apparatus 10 (hereinafter, "external devices") connected via the network 40. The network 40 may be, for example, the Internet. Further, the network 40 may include, for example, a LAN (Local Area Network) in part. The external devices include a reading apparatus 60. The external devices may also include a terminal device 50 used by a user. The user is a person who uses the battery life prediction system and may include, for example, an administrator who manages maintenance of the vehicle 20. The terminal device 50 is, for example, a general-purpose mobile terminal such as a smartphone or tablet terminal, but is not limited thereto. Further, the external devices may further include an information providing apparatus connected via the network 40. The information providing apparatus may provide, for example, weather information for the region in which the vehicle 20 travels. The weather information includes information on the temperature of the region and may be used, for example, to verify or correct the temperature of the tire 30 described later to a more accurate value.

The detection apparatus 70 is a device or in-vehicle system equipped with a sensor and generates information regarding the state of the tire 30 (hereinafter, "mounted tire information"). In the present embodiment, the detection apparatus 70 includes a tire pressure monitoring system (TPMS) installed inside the tire 30 or on the wheel.

The tire pressure monitoring system monitors the pressure (internal pressure) of the tire 30 mounted on the vehicle 20. The tire pressure monitoring system may include, for example, a sensor installed inside the tire 30, a processor that calculates and outputs the pressure of the tire 30 based on the detection value of the sensor, and a memory that stores the detection value of the sensor and the like. The sensor may include a pressure sensor and a temperature sensor.

In the present embodiment, the tire pressure monitoring system outputs, as mounted tire information, information on the pressure of the tire 30 and the temperature of the tire 30 to the battery life prediction apparatus 10. Here, the tire pressure monitoring system is driven by a battery. The tire pressure monitoring system may include, in the mounted tire information, not only information on the pressure and temperature of the tire 30, but also the usage time of the battery. For example, when the tire pressure monitoring system has a function of measuring the elapsed time from the first fluctuation of the voltage level described later, this may be included as the battery usage time in the mounted tire information. However, the battery usage time does not necessarily have to be measured by the tire pressure monitoring system. For example, at a gate described later, the elapsed time from the first fluctuation of the voltage level described later may be measured by communication between the tire pressure monitoring system and the reading apparatus 60, and this may be used as the battery usage time. As described later, performance data, which is accumulated past mounted tire information, is used in the generation of the prediction model. By associating the information on the pressure and temperature of the tire 30 with time information, the time variation of the temperature and pressure of the tire 30 in the performance data can be accurately grasped, enabling the generation of a highly accurate prediction model.

The tire pressure monitoring system may be configured to output the mounted tire information directly to the battery life prediction apparatus 10. However, the tire pressure monitoring system may be driven by a small battery (a battery with a small capacity), such as a button battery. In the present embodiment, in order to extend the life of the battery, the tire pressure monitoring system outputs the mounted tire information to the battery life prediction apparatus 10 via the reading apparatus 60. The tire pressure monitoring system temporarily stores the mounted tire information in memory, and when it becomes possible to communicate with the reading apparatus 60, transmits the stored mounted tire information to the reading apparatus 60.

Further, in the present embodiment, the tire pressure monitoring system measures the voltage of the battery and outputs, as mounted tire information, a "value related to voltage" of the battery to the battery life prediction apparatus 10. The value related to voltage is a voltage value that is segmented and grouped, and at least one group corresponds to a state of the battery when the battery is to be replaced. For example, when the voltage at the start of use (i.e., the voltage of a new battery) is 3.1 V, if the measured voltage of the battery is 3.1 V or higher, the value related to voltage is "3" (level 3). If the measured voltage of the battery is 2.7 V or higher and less than 3.1 V, the value related to voltage is "2" (level 2). If the measured voltage of the battery is 2.4 V or higher and less than 2.7 V, the value related to voltage is "1" (level 1). If the measured voltage of the battery is less than 2.0 V, the value related to voltage is "0" (level 0). Among these, level 1 corresponds to a state of the battery when it is to be replaced. For example, if it is predicted that the value related to voltage after a predetermined period (for example, three months) will be level 1, the user can avoid the operation of the detection apparatus 70 being stopped by replacing the battery within the predetermined period. In this way, by using a value (level) in which the voltage value itself is grouped, rather than the voltage value itself, efficient battery life prediction becomes possible. Further, since the tire pressure monitoring system can transmit information on the voltage of the battery with a small amount of data, it is possible to suppress an increase in the amount of transmission data. Here, the above grouping is merely an example and may be divided into more groups. Further, the state of the battery to be replaced may be determined, for example, based on the voltage range of the battery in which the detection apparatus 70 can transmit mounted tire information.

As illustrated in FIG. 2, the reading apparatus 60 is installed, for example, at a gate, which is an entrance or exit of the yard. When the vehicle 20 passes through the gate, the tire pressure monitoring system mounted on the vehicle 20 and the reading apparatus 60 become capable of communicating, and the reading apparatus 60 reads the mounted tire information. That is, information transmitted from the tire pressure monitoring system is received only when the vehicle 20 approaches the gate. Communication between the tire pressure monitoring system and the reading apparatus 60 may be, for example, near field communication. The mounted tire information is acquired from the detection apparatus 70 by fixed-point observation by the reading apparatus 60 installed at such a predetermined location. Then, the acquisition interface 131 of the battery life prediction apparatus 10 can acquire the mounted tire information via the reading apparatus 60. In the battery life prediction system, the batteries of the detection apparatuses 70 mounted on vehicles 20 passing through the gate provided in the yard can be set as prediction targets. That is, in the battery life prediction apparatus 10 according to the present embodiment, even for detection apparatuses 70 that do not transmit data directly to the battery life prediction apparatus 10 (detection apparatuses 70 whose transmitted information is not always received), highly accurate battery life prediction is possible by the prediction processing described later.

Hereinafter, details of the components of the battery life prediction apparatus 10 will be described. The communication unit 11 includes one or more communication modules connected to the network 40. The communication unit 11 may include, for example, a communication module compatible with mobile communication standards such as 4G (4th Generation) or 5G (5th Generation). The communication unit 11 may include, for example, a communication module compatible with wired or wireless LAN standards.

The storage unit 12 is one or more memories. The memory may be, for example, a semiconductor memory, magnetic memory, or optical memory, but is not limited thereto and may be any memory. The storage unit 12 is, for example, built into the battery life prediction apparatus 10, but may be configured to be accessed externally by the battery life prediction apparatus 10 via any interface.

The storage unit 12 stores various data used in various calculations executed by the controller 13. The storage unit 12 may also store results and intermediate data of various calculations executed by the controller 13. In the present embodiment, the storage unit 12 stores the generated prediction model. Further, in the present embodiment, the storage unit 12 stores performance data. The performance data includes past mounted tire information acquired via the reading apparatus 60 and accumulated in the storage unit 12. The performance data includes past information on the pressure of the tire 30, information on the temperature of the tire 30, the value related to the voltage of the battery, and the usage time of the battery. In other words, time-series information on the pressure, temperature, and value related to voltage of the tire 30 associated with the usage time of the battery is stored as performance data in the storage unit 12.

The controller 13 includes one or more processors. The processor may be, for example, a general-purpose processor or a dedicated processor specialized for specific processing, but is not limited thereto and may be any processor. The controller 13 controls the overall operation of the battery life prediction apparatus 10.

Here, the battery life prediction apparatus 10 may have the following software configuration. One or more programs used to control the operation of the battery life prediction apparatus 10 are stored in the storage unit 12. When the program stored in the storage unit 12 is read by the processor of the controller 13, the controller 13 functions as the acquisition interface 131, the model generator 132, the predictor 133, and the output unit 134.

The acquisition interface 131 acquires performance data for generating training data when generating a prediction model. The training data may be generated by extracting, from the performance data, data for calculating the objective variable (for example, the value related to the voltage of the battery after a predetermined period) and explanatory variables (for example, the temperature and pressure of the tire 30, etc.). The acquisition interface 131 also acquires the prediction model stored in the storage unit 12 when predicting battery life using the prediction model. Further, the acquisition interface 131 acquires input data. The input data includes, for example, mounted tire information detected by the detection apparatus 70 driven by the battery to be predicted. That is, the input data includes information on the temperature of the tire 30, the pressure of the tire 30, the value related to the voltage of the battery, and the usage time of the battery, which are used for battery life prediction.

The model generator 132 generates a prediction model based on the performance data acquired by the acquisition interface 131. The model generator 132 performs preprocessing on the temperature and pressure of the tire 30 in the performance data. Through preprocessing, preprocessing amounts such as basic statistical quantity, cumulative value, change per unit time, time-series feature, and travel time are obtained. Details of the preprocessing and preprocessing amounts will be described later. The model generator 132 generates training data using at least a portion of the value related to the voltage of the battery and the preprocessing amounts as explanatory variables, and the value related to the voltage of the battery after a predetermined period as the objective variable. The predetermined period is three months in the present embodiment, but may be, for example, six months or one year, and is not limited to a specific value. The model generator 132 generates a prediction model by machine learning using the training data. The machine learning method is not limited, but may be, for example, random forest. The number of sets of training data is not limited, but may be 20,000 or more as an example.

In the present embodiment, the model generator 132 generates a prediction model without distinguishing the type or region of the vehicle 20. As another example, the model generator 132 may generate prediction models for each type of vehicle 20 or for each region. By selecting from among a plurality of prediction models one that matches the type or region of the vehicle 20 and performing battery life prediction, it becomes possible to make predictions according to the circumstances of the type or region of the vehicle 20. For example, in general, there is a difference in the tendency of battery consumption between cold and warm regions, and predictions that take such circumstances into account become possible. When prediction models for each type or region of vehicle 20 are generated, the training data may also use, for example, axle position, vehicle ID, fleet ID, and country information as explanatory variables. The axle position is the position of the axle in the vehicle 20 and differs depending on the type of vehicle 20. The vehicle ID is an identifier for identifying each vehicle 20. The fleet ID is an identifier given to a group of vehicles 20, such as a plurality of vehicles 20 working in a yard, and differs depending on the region (work location). The country information is, for example, an identifier for the country and corresponds to regional information of a large division. These pieces of information may be added by at least one of the detection apparatus 70 and the reading apparatus 60 and accumulated as performance data.

As described above, the detection apparatus 70 is an in-vehicle device, and the battery life is affected by the running state of the vehicle 20 and the like. Therefore, by performing preprocessing so that the running state of the vehicle 20 is taken into account for the information included in the performance data, and by using at least a portion of the values (preprocessing amounts) obtained by preprocessing as explanatory variables of the prediction model, it is possible to generate a prediction model with even higher accuracy. In the present embodiment, the model generator 132 performs the preprocessing described below.

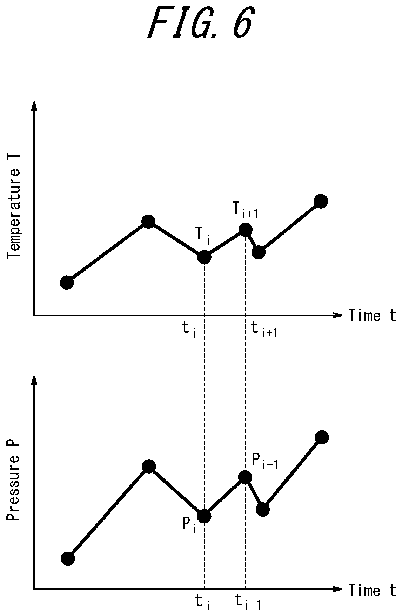

FIG. 6 is a diagram for explaining preprocessing. Preprocessing is processing for calculating preprocessing amounts, which are basic statistical quantity, cumulative value, change per unit time, time-series feature, and travel time. In FIG. 6, the upper diagram presents the temperature of the tire 30 in the performance data, and the lower diagram presents the pressure of the tire 30 in the performance data, each as time-series information (line graphs). In FIG. 6, the vertical axis of the upper diagram is temperature T, and the vertical axis of the lower diagram is pressure P. The horizontal axis in FIG. 6 is a common time axis.

In the present embodiment, the model generation unit 132 first calculates basic statistical quantities as preprocessing for the temperature and pressure of the tire 30. In this example, the basic statistical quantities are the maximum and minimum values. However, the basic statistical quantities are not limited to the maximum and minimum values, and may include, for example, mean value, variance, maximum value, minimum value, and the like. In the example of FIG. 6, the maximum value $T_{i+1}$ of the temperature T and the maximum value $P_{i+1}$ of the pressure P at time $t_{i+1}$ are illustrated. Further, in the example of FIG. 6, the minimum value $T_i$ of the temperature T and the minimum value $P_i$ of the pressure P at time $t_i$ are illustrated. In this manner, the model generation unit 132 obtains the maximum and minimum values as basic statistical quantities for the entirety of the time-series information of the temperature and pressure of the tire 30.

The model generation unit 132 determines pre-travel data and post-travel data of the performance data based on changes in the temperature T of the tire 30. When the vehicle 20 travels, the temperature T of the tire 30 rises due to frictional heat with the road surface and the like during travel. In the example of FIG. 6, the maximum value $T_{i+1}$ is the post-travel data for the temperature T. The maximum value $P_{i+1}$, which is data at the same time $t_{i+1}$, is the post-travel data for the pressure P. Further, in the example of FIG. 6, the minimum value $T_i$ is the pre-travel data for the temperature T. The minimum value $P_i$, which is data at the same time $t_i$, is the pre-travel data for the pressure P. In this way, the performance data includes pre-travel data and post-travel data determined based on changes in the temperature of the tire 30. The model generation unit 132 can further calculate the travel time. The travel time is calculated as the difference between the usage time of the battery included in the pre-travel data and the usage time of the battery included in the post-travel data. By such calculation, the performance data can be associated with the travel state, enabling the generation of a prediction model with even higher accuracy that takes the travel state into account.

The model generation unit 132 may use the basic statistical quantities as explanatory variables for the training data, but it is further preferable to use, as explanatory variables, cumulative values, changes per unit time, time-series features, and travel time based on the basic statistical quantities. The cumulative value is calculated as the sum of values obtained by multiplying the time difference by the difference between the pre-travel data and the post-travel data for the temperature and pressure of the tire 30. For example, the cumulative value for the temperature T is calculated by the following formula (1). Further, for example, the cumulative value for the pressure P is calculated by the following formula (2). However, in the present embodiment, formula (1) is calculated as the post-travel increase only when $T_{i+1} > T_i$. Similarly, formula (2) is calculated only when $P_{i+1} > P_i$.

[Math. 1]

$$\sum (T_{i+1} - T_i) \times (t_{i+1} - t_i) \quad \cdots \quad (1)$$
$$\sum (P_{i+1} - P_i) \times (t_{i+1} - t_i) \quad \cdots \quad (2)$$

The change per unit time is calculated by dividing the difference between the pre-travel data and the post-travel data by the time difference. For example, the change per unit time for the temperature T is calculated by the following formula (3). Further, for example, the change per unit time for the pressure P is calculated by the following formula (4). However, in the present embodiment, formula (3) is calculated as the post-travel increase only when $T_{i+1} > T_i$. Similarly, formula (4) is calculated only when $P_{i+1} > P_i$.

[Math. 2]

$$\frac{T_{i+1} - T_i}{t_{i+1} - t_i} \quad \cdots \quad (3)$$

$$\frac{P_{i+1} - P_i}{t_{i+1} - t_i} \quad \cdots \quad (4)$$

Further, the time-series feature may be a trend component or an autoregressive component in time-series analysis for the temperature and pressure of the tire 30. These parameters based on the basic statistical quantities are also associated with the travel state, enabling the generation of a prediction model with even higher accuracy that takes the travel state into account. The model generation unit 132 may further perform processing such as normalization on the parameters used as explanatory variables. In addition, the model generation unit 132 may perform the above preprocessing after interpolating the performance data obtained by sparse fixed-point observation using an interpolation technique between data. Furthermore, the model generation unit 132 may update the temperature of the tire 30 in the pre-travel data based on weather information. Since the temperature of the tire 30 before travel of the vehicle 20 is considered to be the same as the ambient temperature, overwriting with the temperature data from weather information allows the temperature of the tire 30 before travel to be corrected to a more accurate value, enabling the generation of a prediction model with even higher accuracy.

Further, the model generation unit 132 may generate a plurality of prediction models (candidate prediction model group) by using, as explanatory variables, at least a part of the values related to the voltage of the battery and the preprocessing amounts, and as the objective variable, a value related to the voltage of the battery after a predetermined period, using training data and a plurality of machine learning methods. In this case, the model generation unit 132 may select one prediction model from the candidate prediction model group based on an index. The plurality of machine learning methods may include, for example, random forest, convolutional neural network, recurrent neural network, and the like. The index used for evaluation of the generated candidate prediction model group may be accuracy, precision, recall, specificity, F-value, or a combination of at least some of these.

The predictor 133 predicts, as the life of the battery, a value related to the voltage after a predetermined period in the future, using the input data acquired by the acquisition interface 131 and the prediction model stored in the storage unit 12. As described above, the prediction model is generated by machine learning using training data based on the time-series information of the pressure and temperature of the tire 30 in the past, associated with the usage time of the battery. Particularly in a gate-type TPMS, only intermittent, discontinuous data of the pressure and temperature of the tire 30 may be obtained by fixed-point observation, but by performing machine learning using the accumulated performance data, a prediction model with high prediction accuracy is generated. Therefore, it is possible to predict the battery life of the detection apparatus 70, which detects information on the state of the tire 30, with high accuracy.

Here, in the present embodiment, the explanatory variables of the prediction model are the above preprocessing amounts and the like. The predictor 133 performs preprocessing similar to that of the model generation unit 132 on the input data. Then, the predictor 133 inputs the preprocessing amounts obtained by the preprocessing into the prediction model.

The output unit 134 outputs the result predicted by the predictor 133 to a display device or the like. For example, a display provided in the terminal device 50 can function as a display device for presenting the prediction result. The prediction result includes a value related to the predicted voltage (for example, the voltage level after a predetermined period), and is provided to the user via the network 40. The user can obtain prediction information on the battery life of the detection apparatus 70 regardless of location. For example, the user can plan battery replacement work for the detection apparatus 70 based on the prediction result. For example, the predictor 133 may periodically perform prediction for the detection apparatuses 70 of a plurality of vehicles 20 operating in a yard. By periodically presenting the prediction result to the user, the output unit 134 can prevent omissions in battery replacement work. Further, the accuracy of the prediction result may be periodically verified based on actual measured values. For example, if the accuracy rate falls below a preset reference value, the model generation unit 132 may generate or update the prediction model again using performance data added after the prediction model was generated. Here, performance data may also be used for verification of the accuracy of the prediction result. For example, the performance data may be divided and used as training data, validation data, test data, and the like.

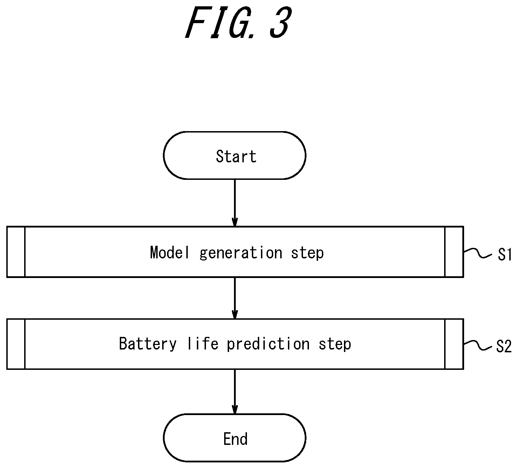

FIG. 3 is a flowchart illustrating an example of the battery life prediction processing executed by the battery life prediction apparatus 10. The acquisition interface 131 and the model generation unit 132 execute a model generation step (step S1, model generation method) for generating a prediction model for predicting battery life. In addition, the acquisition interface 131, the predictor 133, and the output unit 134 execute a battery life prediction step (step S2, battery life prediction method) for predicting the life of the battery, which is the prediction target, using the generated prediction model. The battery life prediction step may be executed continuously with the model generation step, or may be executed after a certain period has elapsed following the model generation step.

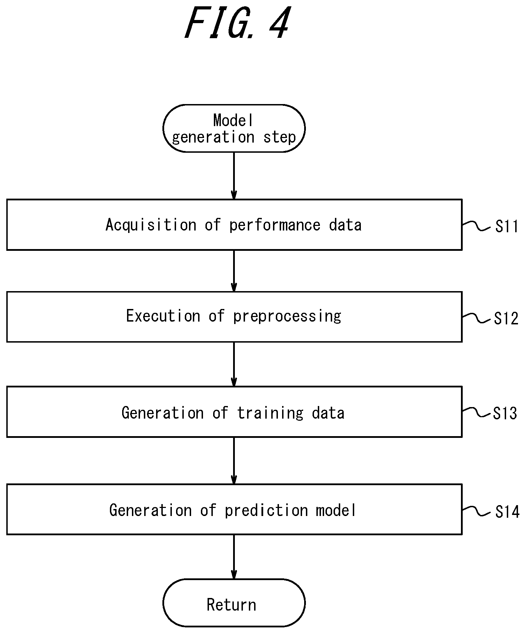

FIG. 4 is a flowchart illustrating the details of the model generation step in FIG. 3. The acquisition interface 131 acquires, for example, performance data accumulated in the storage unit 12 (step S11).

The model generation unit 132 performs the above preprocessing and calculates the preprocessing amounts (step S12). The model generation unit 132 generates training data using the calculated preprocessing amounts (step S13), and generates a prediction model by machine learning using the training data (step S14). The generated prediction model is stored in the storage unit 12.

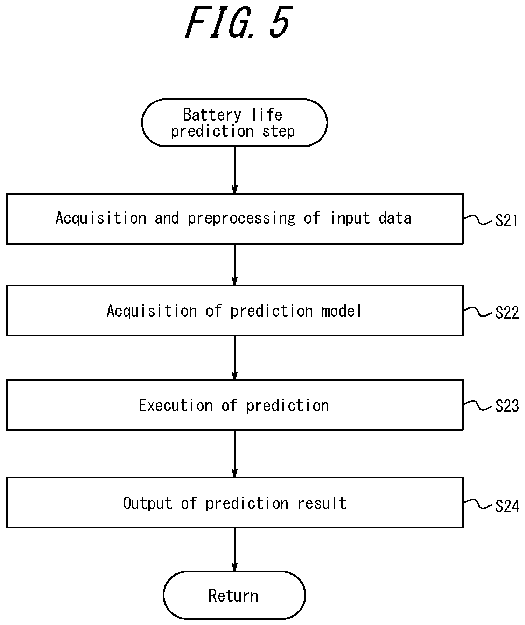

FIG. 5 is a flowchart illustrating the details of the battery life prediction step in FIG. 3. The acquisition interface 131 acquires input data, performs preprocessing (step S21), and acquires the prediction model from the storage unit 12 (step S22).

The predictor 133 predicts, as the life of the battery, a value related to the voltage after a predetermined period in the future, using the input data and the prediction model (step S23). The output unit 134 outputs the result predicted by the predictor 133 (step S24). The output prediction result may be presented, for example, on a display of the terminal device 50 so that an administrator managing maintenance of the vehicle 20 can confirm it. For example, if the prediction result predicts that the batteries of the detection apparatuses 70 installed in 10 vehicles 20 will reach level 1 (a state in which the battery should be replaced) in three months, the administrator may schedule battery replacement for those 10 vehicles 20 within three months.

As described above, the battery life prediction apparatus 10 and the battery life prediction method according to the present embodiment can predict the battery life of the detection apparatus 70, which detects information on the state of the tire 30, with high accuracy by the above configuration and steps. Here, when the method of the present embodiment was verified, it was observed that including the change per unit time as an explanatory variable improved the prediction accuracy by 1% to 2% compared to when it was not included. Further, including the cumulative value as an explanatory variable improved the prediction accuracy by 5% to 6% compared to when it was not included.

The embodiments of the present disclosure have been described above with reference to the drawings and examples, but it should be noted that various modifications or alterations can be easily made based on the present disclosure by those skilled in the art. Therefore, it should be noted that such modifications or alterations are included within the scope of the present disclosure. For example, the functions included in each component or each step can be rearranged so as not to be logically inconsistent, and a plurality of components or steps can be combined into one or divided. The embodiments according to the present disclosure can also be realized as a program executed by a processor provided in the apparatus and as a storage medium recording the program. It should be understood that these are also included within the scope of the present disclosure.

For example, the configuration of the battery life prediction apparatus 10 and the battery life prediction system illustrated in FIGS. 1 and 2 is merely an example, and is not limited to the configuration of FIGS. 1 and 2. For example, the battery life prediction system may have a configuration in which the battery life prediction apparatus 10 and the reading apparatus 60 are integrated. Further, in FIG. 2, it is not necessary for weather information to be provided from the information providing apparatus. In addition, the storage unit 12 may be a storage device not provided in the battery life prediction apparatus 10, but a storage device (a storage device on the cloud) on the network 40 as viewed from the battery life prediction apparatus 10. For example, the performance data may be accumulated in a storage device on the network 40. Further, the prediction model and the value related to the predicted voltage (prediction result) may be stored in a storage device on the network 40. With such a configuration, the battery life prediction apparatus 10 is not limited to a device equipped with a large storage device (such as a server computer), and can be configured, for example, as a small computer (such as a tablet terminal).

Further, the model generation unit 132 and the predictor 133 may be included in different computers. For example, the model generation unit 132 may be included in another computer (an independent model generation apparatus) that is capable of communicating with the battery life prediction apparatus 10 and can also access the storage unit 12. In this case, the battery life prediction apparatus 10 may predict the battery life using the prediction model generated by another computer and stored in the storage unit 12. The prediction model may be generated in the same manner as described above. That is, another computer may acquire the performance data and generate the prediction model using training data based on the performance data.

REFERENCE SIGNS LIST

| | |
|---|---|
| 10 | Battery life prediction apparatus |
| 11 | Communication unit |
| 12 | Storage unit |
| 13 | Controller |
| 20 | Vehicle |
| 30 | Tire |
| 40 | Network |
| 50 | Terminal device |
| 60 | Reading apparatus |
| 70 | Detection apparatus |
| 131 | Acquisition interface |
| 132 | Model generation unit |
| 133 | Predictor |
| 134 | Output unit |

**Claims**

1. A battery life prediction apparatus for predicting a life of a battery of a detection apparatus that detects information on a state of a tire, the battery life prediction apparatus comprising:

an acquisition interface configured to acquire input data including a temperature of the tire, a pressure of the tire, a value related to a voltage of the battery, and a usage time of the battery; and

a predictor configured to predict, as the life of the battery, a value related to the voltage after a predetermined period in the future, using the input data and a prediction model,

wherein with a basic statistical quantity, a cumulative value, a change per unit time, a time-series feature, and travel time with regard to the temperature of the tire and the pressure of the tire in performance data as preprocessing amounts, the prediction model is generated by machine learning using training data that takes a value related to voltage of the battery and at least a portion of the preprocessing amounts as explanatory variables and the value related to voltage of the battery after the predetermined period as an objective variable.

2. The battery life prediction apparatus according to claim 1, wherein

the input data is acquired from the detection apparatus by fixed-point observation by a reading apparatus installed at a predetermined location, and

the acquisition interface is configured to acquire the input data via the reading apparatus.

3. The battery life prediction apparatus according to claim 1 or 2, wherein the value related to the voltage is a voltage value that is segmented and grouped, and at least one group corresponds to a state of the battery when the battery is to be replaced.

4. The battery life prediction apparatus according to claim 3, wherein the usage time of the battery is an elapsed time from when the value related to the voltage first fluctuates.

5. The battery life prediction apparatus according to any one of claims 1 to 4, wherein

the performance data includes pre-travel data and post-travel data determined based on a change in the temperature of the tire, and

the travel time is calculated as a difference between the usage time of the battery included in the pre-travel data and the usage time of the battery included in the post-travel data.

6. The battery life prediction apparatus according to claim 5, wherein

the cumulative value is calculated as a sum of values obtained by multiplying a time difference by a difference between the pre-travel data and the post-travel data for the temperature of the tire and the pressure of the tire, and

the time-series feature is a trend component or an autoregressive component in time-series analysis for the temperature of the tire and the pressure of the tire.

7. The battery life prediction apparatus according to claim 5 or 6, wherein the temperature of the tire in the pre-travel data is updated based on weather information.

8. The battery life prediction apparatus according to any one of claims 1 to 7, wherein the training data also uses axle position, vehicle ID, fleet ID, and country information as explanatory variables.

9. A battery life prediction method for predicting a life of a battery of a detection apparatus that detects information on a state of a tire, the battery life prediction method comprising:

acquiring input data including a temperature of the tire, a pressure of the tire, a value related to a voltage of the battery, and a usage time of the battery; and

predicting, as the life of the battery, a value related to the voltage after a predetermined period in the future, using the input data and a prediction model,

wherein with a basic statistical quantity, a cumulative value, a change per unit time, a time-series feature, and travel time with regard to the temperature of the tire and the pressure of the tire in performance data as preprocessing amounts, the prediction model is generated by machine learning using training data that takes a value related to voltage of the battery and at least a portion of the preprocessing amounts as explanatory variables and the value related to voltage of the battery after the predetermined period as an objective variable.

## FIG. 1

Battery life prediction apparatus — 10

11 — Communication unit

12 — Storage unit

Controller — 13

Acquisition interface — 131

Model generation unit — 132

Predictor — 133

Output unit — 134

Detection apparatus — 70

20

Reading apparatus — 60

EP 4 751 941 A1

# FIG. 2

(Weather information)

Yard

10

40

50

60

Gate

20

70

30

20

30     30

# FIG. 3

Start

Model generation step ～ S1

Battery life prediction step ～ S2

End

# *FIG. 4*

```
      ┌─────────────────────┐
      │     Model           │
      │ generation step     │
      └─────────────────────┘
                │
                ▼
┌─────────────────────────────────────┐
│  Acquisition of performance data     │ ～S11
└─────────────────────────────────────┘
                │
                ▼
┌─────────────────────────────────────┐
│   Execution of preprocessing         │ ～S12
└─────────────────────────────────────┘
                │
                ▼
┌─────────────────────────────────────┐
│    Generation of training data       │ ～S13
└─────────────────────────────────────┘
                │
                ▼
┌─────────────────────────────────────┐
│   Generation of prediction model     │ ～S14
└─────────────────────────────────────┘
                │
                ▼
      ┌─────────────────────┐
      │       Return        │
      └─────────────────────┘
```

# FIG. 5

```
        ╭─────────────────────╮
        │    Battery life     │
        │   prediction step   │
        ╰─────────────────────╯
                   │
                   ▼
   ┌─────────────────────────────────────────┐
   │  Acquisition and preprocessing of input data  │──∿ S21
   └─────────────────────────────────────────┘
                   │
                   ▼
   ┌─────────────────────────────────────────┐
   │       Acquisition of prediction model        │──∿ S22
   └─────────────────────────────────────────┘
                   │
                   ▼
   ┌─────────────────────────────────────────┐
   │          Execution of prediction             │──∿ S23
   └─────────────────────────────────────────┘
                   │
                   ▼
   ┌─────────────────────────────────────────┐
   │         Output of prediction result          │──∿ S24
   └─────────────────────────────────────────┘
                   │
                   ▼
            ╭──────────────╮
            │    Return    │
            ╰──────────────╯
```

# FIG. 6

## INTERNATIONAL SEARCH REPORT

| International application No. |
|---|
| **PCT/JP2024/026998** |

### A. CLASSIFICATION OF SUBJECT MATTER

***B60C 23/04***(2006.01)i; ***H01M 10/42***(2006.01)i; ***H01M 10/48***(2006.01)i
FI: B60C23/04 120A; H01M10/42 P; H01M10/48 P; B60C23/04 160Z; B60C23/04 220B

According to International Patent Classification (IPC) or to both national classification and IPC

### B. FIELDS SEARCHED

Minimum documentation searched (classification system followed by classification symbols)
B60C23/00-23/20; B60C19/00; G01L17/00; H01M10/42-10/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-56921 A (BRIDGESTONE CORPORATION) 11 April 2022 (2022-04-11) | 1-9 |
| A | JP 2007-223463 A (THE YOKOHAMA RUBBER CO., LTD.) 06 September 2007 (2007-09-06) | 1-9 |
| A | JP 2002-331814 A (PACIFIC IND CO., LTD.) 19 November 2002 (2002-11-19) | 1-9 |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 September 2024** | **17 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
**Information on patent family members**

International application No.

**PCT/JP2024/026998**

| Patent document cited in search report | | | Publication date (day/month/year) | Patent family member(s) | | | Publication date (day/month/year) |
|---|---|---|---|---|---|---|---|
| JP | 2022-56921 | A | 11 April 2022 | WO | 2022/071038 | A1 | |
| JP | 2007-223463 | A | 06 September 2007 | (Family: none) | | | |
| JP | 2002-331814 | A | 19 November 2002 | US | 2002/0167400 | A1 | |
| | | | | EP | 1256465 | A2 | |
| | | | | DE | 60122474 | T2 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06163084 A